# FASCICULE DE BREVET EUROPEEN

(11) **EP 2 105 639 B1**
(45) Date de publication et mention de la délivrance du brevet: **17.08.2016**
(21) Numéro de dépôt: 09305247.0
(22) Date de dépôt: 19.03.2009
(51) Int. Cl.: F16J 15/08

(54) **Joint de culasse pour moteur à combustion interne**
Zylinderkopfdichtung für Verbrennungsmotor
Cylinder head gasket for an internal combustion engine

(30) Priorité: 26.03.2008 FR 0851918
(43) Date de publication de la demande: 30.09.2009
(73) Titulaire: Renault S.A.S., 92100 Boulogne-Billancourt (FR)
(72) Inventeur: Kalos, Thomas, 75012 Paris (FR)

(56) Documents cités:
- EP-A- 1 184 608
- DE-A- 19 548 237
- DE-U- 20 320 602
- FR-A- 2 774 430

## Description

L'invention concerne un joint de culasse pour moteur à combustion interne.

Sur la plupart des moteurs refroidis par eau, un tel joint est intercalé, en étant comprimé, entre le bloc moteur - ou carter cylindres - et la culasse.

Sa fonction est d'assurer l'étanchéité entre ces deux éléments ainsi qu'entre différentes ouvertures traversant leur interface, ouvertures qui comprennent généralement, outre les alésages ou chemisages de cylindre, des conduits de circulation d'huile, des conduits de circulation du liquide de refroidissement et les passages des goujons de fixation de la culasse sur le bloc moteur.

Un joint de culasse classique, parfois appelé « multi feuilles » est composé de trois tôles superposées en acier, inoxydable ou non, solidaires les unes des autres, à savoir une tôle centrale, ou cale d'épaisseur, et deux tôles extérieures (plus fines) entre lesquelles la cale est prise en sandwich.

Les tôles extérieures sont nervurées, afin de parfaire l'étanchéité.

La tôle centrale peut présenter des surépaisseurs, en particulier des surépaisseurs annulaires, appelées « stoppeurs », qui entourent le bord des fûts (alésages des cylindres) et sont destinées également à assurer une première barrière d'étanchéité à ce niveau afin d'empêcher l'échappement des gaz de combustion.

Les trois tôles superposées ont généralement des contours identiques, et par conséquent des aires similaires, de sorte que la quantité d'acier inoxydable utilisée pour la fabrication du joint de culasse est relativement importante, ce qui influe sur son prix de revient.

Les efforts repris par les différentes nervures tendent à augmenter les débattements dynamiques de la culasse

Lorsqu'il existe un défaut d'étanchéité dans cette zone, la fuite des gaz se fait dans le plan de l'interface du joint de culasse avec la culasse ou avec le bloc moteur, ou entre deux des tôles du joint de culasse, vers un ou plusieurs canaux du circuit de refroidissement. Cela conduit à une augmentation de la pression de ce circuit, ce qui peut générer une consommation du liquide de refroidissement et conduire à une surchauffe, voire à la casse, du moteur.

Il y a également un risque de contact du liquide de refroidissement avec les nervures des tôles qui assurent l'étanchéité des gaz, au niveau du stoppeur et, corrélativement, un risque de détérioration desdites nervures.

Pour réduire ce risque, la solution actuellement mise en oeuvre est de prévoir une étanchéité très robuste.

Cette robustesse accrue implique un coût de fabrication élevé ; de plus, elle nécessite une nervuration renforcée des tôles, ce qui augmente encore les débattements dynamiques de la culasse et requiert une tension i importante des tiges filetées des goujons de serrage.

On connaît notamment du document DE203206020 U un joint de culasse conforme au préambule de la revendication 1.

L'objectif de l'invention est de pallier les différents inconvénients exposés ci-dessus.

Elle a pour objet un joint de culasse pour moteur à combustion

### tel que celui décrit dans la revendication 1.

De préférence, du reste, l'ensemble des ouvertures annexes sont munies d'un tel joint d'étanchéité, surmoulé et/ou flué.

Par ailleurs, un certain nombre de caractéristiques additionnelles possibles de l'invention sont énoncées dans les revendications 2 à 8.

D'autres caractéristiques et avantages de l'invention apparaîtront à la lecture de la description qui va maintenant en être faite en se référant aux dessins annexés, sur lesquels :
La figure 1 est une vue de dessus, avec arrachement partiel de la partie gauche de la tôle supérieure, d'un joint de culasse conforme à l'invention.
Les figures 2 et 3 sont des vues en coupe du joint de culasse de la figure 1, les plans de coupe étant respectivement référencés A-A et B-B sur cette figure.

Le joint de culasse 1 représenté vu de dessus a une forme générale globalement rectangulaire.

Il s'agit dans l'exemple illustré d'un joint de culasse « multi feuilles », tel que décrit plus haut.

Il est composé d'une paire de tôles supérieure et inférieure 2 et 2,' en acier inoxydable, relativement fines, et d'une tôle centrale 3 plus épaisse formant cale d'épaisseur, avantageusement en acier au carbone.

Cette dernière est prise en sandwich entre les tôles 2 et 2', et en est solidaire, par exemple par collage ou soudage.

La référence 4 désigne quatre ouvertures circulaires, que l'on appellera « principales » destinées chacune à venir en correspondance avec un alésage de cylindre du bloc moteur.

De manière bien connue, le joint de culasse 1 - et plus précisément la tôle centrale 3 - est traversée par diverses autres ouvertures que l'on appellera « annexes ». Ces ouvertures sont destinées à venir chacune en correspondance avec un passage assurant une communication entre le bloc moteur et la culasse.

Ainsi, une série de trois ouvertures annexes portant la référence 5, situées sur un grand côté du joint de culasse, servent au passage de gaz recyclés, sont adaptées pour se positionner en correspondance avec une cheminée dite de « blow-by ».

Le terme anglais « blow-by » désigne le phénomène d'échappement intempestif d'une portion du mélange gazeux combustible sous pression air/carburant situé dans l'alésage ou le chemisage d'un cylindre hors de celui-ci, vers le carter de vilebrequin, par suite d'un défaut d'étanchéité (due à l'usure par exemple), entre les segments du piston et la paroi dudit cylindre.

Ces gaz imbrûlés contiennent des vapeurs d'huile et véhiculent des éléments polluants et nocifs.

C'est pourquoi, sur les moteurs thermiques modernes, il est prévu de les recycler plutôt que de rejeter dans l'atmosphère, en les aspirant dans la partie inférieure du moteur, et de les réinjecter dans une chambre de combustion du moteur afin d'en assurer la combustion complète.

Ce retour des gaz à l'admission se fait via le bloc moteur - ou carter cylindres - et la culasse, par passage à l'intérieur de conduits appropriés appelés « cheminées de blow-by ».

Tout autour des ouvertures principales 4, à l'intérieur du contour rectangulaire du joint de culasse, sont ménagées d'autres ouvertures annexes 60, 61, 62, 63, 64.

Ces ouvertures sont conformées et adaptées pour venir en vis-à-vis de conduits de passage de différents fluides, tels que de l'huile ou du liquide de refroidissement du moteur notamment, et de cheminées traversées par les tiges filetées des vis ou des goujons servant à la fixation et au serrage de la culasse sur le bloc moteur.

Conformément à l'invention, l'étanchéité au niveau de ces ouvertures annexes n'est pas assurée, comme c'est le cas sur les joints de culasse traditionnels, au moyen de nervures embouties dans les tôles extérieures 2 et 2', mais au moyen de joints d'étanchéité surmoulés ou flués.

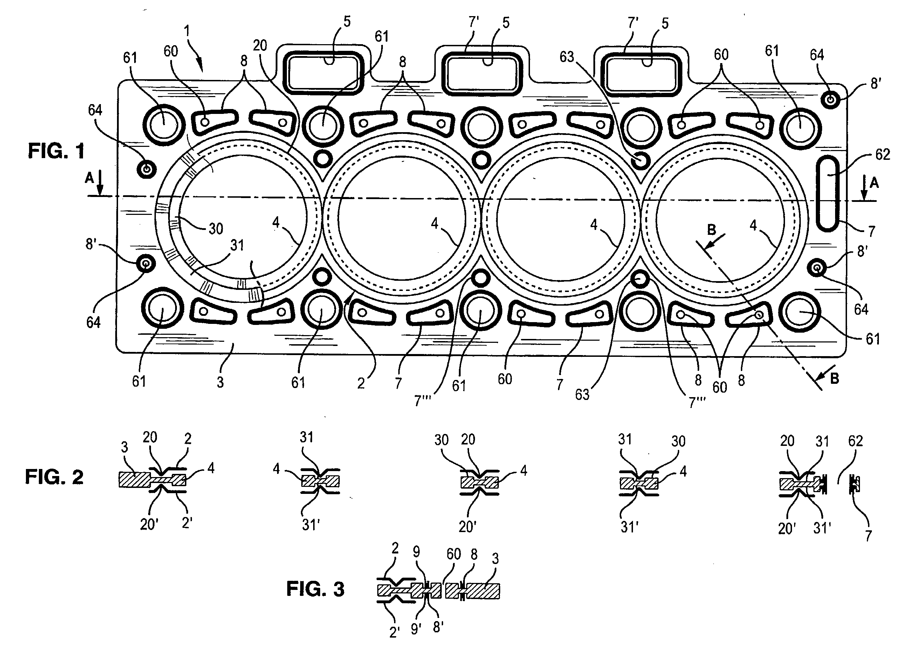

Du reste, comme on le voit sur la figure 1, la tôle supérieure 2 visible sur cette figure, n'a pas un contour rectangulaire similaire à celui de la tôle centrale 3.

Elle a une forme constituée de quatre anneaux circulaires accolés et alignés, adaptés pour entourer chacun une ouverture 4 de la tôle centrale 3. Il en est de même pour la tôle inférieure 2'.

Les zones de la tôle centrale 3 qui sont traversées par les ouvertures annexes 5, 60, 61, 62, 63, et 64 ne sont donc pas recouvertes par les tôles externes.

On comprend que grâce à cet agencement la quantité d'acier inoxydable utilisée pour la fabrication du joint de culasse est réduite.

Les joints assurant l'étanchéité des ouvertures annexes sont donc exclusivement portés par la tôle centrale formant cale d'épaisseur et, lorsque le joint de culasse est monté, se trouvent directement en appui, sur une face du joint de culasse contre le bloc moteur, et, sur son autre face, contre la culasse.

Les joints d'étanchéité sont en matériau élastomère, souple et élastique, adapté pour encaisser les contraintes mécaniques statiques et dynamiques mises en oeuvre, pour résister à l'agression chimique des fluides avec lesquels ils sont en contact, et pour supporter les températures élevées auxquels ils sont exposés.

Les figures 2 et 3 montrent deux types de joints susceptibles d'être utilisés.

Le joint 7 visible sur la droite de ces figures est un joint en élastomère garnissant une ouverture annexe 62 de relativement grandes dimensions, en forme de lumière. Il est surmoulé sur le chant de cette ouverture, sur toute sa périphérie, contre la « tranche » de la tôle 3, en faisant légèrement saillie sur chacune des deux faces de cette dernière.

Ce chant peut avantageusement présenter un profil en creux (gorge) ou en relief (nervure) pour assurer une retenue satisfaisante et durable du joint contre le pourtour de l'ouverture 62.

Des dispositions similaires peuvent être prévues pour garnir les autres ouvertures annexes de dimensions relativement importantes telles que celles désignées 5, 61 et 63 sur les dessins. Les joints munissant ces types d'ouvertures portent les références 7', 7" et, respectivement, 7"' sur la figure 1.

En revanche, pour d'autres ouvertures 60, 64, la disposition est différente. Le joint d'étanchéité n'est pas appliqué contre le chant de l'ouverture, mais est en deux parties disposées sur chacune des deux faces de la tôle 3 en entourant ladite ouverture.

Dans le mode de réalisation illustré sur la figure 3, il s'agit d'un joint flué, par exemple à base de silicone, en forme de cordon à contour fermé.

Dans chaque face de la tôle 3 est creusé un lamage 9, 9', présentant un contour approximativement triangulaire, qui entoure avec un jeu relativement important le trou circulaire 60.

Les deux lamages 9 et 9', en regard l'un de l'autre, définissent donc une zone de tôle d'épaisseur réduite. Chaque lamage reçoit un cordon de silicone flué 8, 8', constitutifs du joint d'étanchéité.

Des dispositions similaires peuvent être prévues pour garnir les autres ouvertures annexes telles que celles désignées par la référence 64 sur les dessins.

Les joints munissant ce type d'ouverture portent la référence 8" sur la figure 1.

Comme le joint 7, les deux « demi joints » 8 et 8' font légèrement saillie par rapport à la face correspondante de la tôle 3.

L'étanchéité autour des ouvertures principales 4 est réalisée, dans l'exemple illustré, de manière classique par des nervures circulaires 20 et 20', de section en « V », embouties dans les tôles externes 2 et 2'.

Leur arête vient en appui dans des lamages circulaires 31, 31' qui entourent le rebord 30, formant « stoppeur » de chaque ouverture 4.

D'autres agencements pourraient bien évidemment être prévus pour assurer l'étanchéité à ce niveau.

Le degré de dépassement « en saillie » des joints de type surmoulé 7 ou de type flué 8-8' par rapport au plan de chaque face de la tôle 3 sont déterminés de telle façon que lorsque le joint de culasse est en place, en étant comprimé entre la culasse et le bloc moteur, les parties en saillie se déforment pour assurer l'étanchéité voulue autour de l'ouverture annexe considérée, alors qu'autour des ouvertures principales l'étanchéité aux gaz est assurée par la présence des stoppeurs et des nervures qui les entourent, lesquelles se trouvent également comprimées et déformées.

## Revendications

1. Joint de culasse (1) pour moteur à combustion interne, apte à être intercalé, en étant comprimé, entre un bloc moteur et une culasse, ce joint (1) étant traversé par une série d'ouvertures circulaires (4), dites principales, destinées à venir chacune en correspondance avec un alésage de cylindre du bloc moteur, et un ensemble d'ouvertures (5, 60, 61, 62, 63, 64), dites annexes, destinées à venir chacune en correspondance avec un passage assurant une communication entre le bloc moteur et la culasse, ledit joint comprenant :
- une tôle (3) centrale formant cale d'épaisseur qui possède des rebords annulaires (30), ou « stoppeurs », qui entourent le bord des ouvertures principales (4) et assurent l'étanchéité à ce niveau,
- deux tôles extérieures plus fines (2, 2') entre lesquelles est intercalée la tôle centrale formant cale, présentant des ouvertures circulaires qui correspondent aux ouvertures principales (4) et possédant des nervures circulaires (20' 20') qui entourent les stoppeurs (30) de la tôle (3) formant cale d'épaisseur, tout en pinçant cette dernière,
**caractérisé par le fait que** lesdites tôles extérieures s'étendent seulement sur une zone limitée correspondant aux ouvertures principales (4) sans recouvrir les zones correspondant aux ouvertures annexes et en ce que lesdites ouvertures annexes de la tôle centrale sont garnies d'un joint d'étanchéité (7 ; 8) surmoulé ou flué, en matière souple et élastique.

2. Joint de culasse selon la revendication 1, **caractérisé par le fait que** ledit joint d'étanchéité (7 ; 8) est un élastomère.

3. Joint de culasse selon la revendication 2, **caractérisé par le fait que** ledit joint en élastomère (7) est surmoulé sur le chant du joint de culasse, tout autour de l'ouverture (62).

4. Joint de culasse selon la revendication 1, **caractérisé par le fait que** ledit joint en élastomère (8) est disposé dans un renfoncement annulaire (9) formé dans l'une au moins des deux faces du joint de culasse et entourant l'ouverture (60).

5. Joint de culasse selon la revendication 4, **caractérisé par le fait qu'**il comporte une paire de joints en élastomère (8 - 8') disposés dans des renfoncements annulaires (9, 9') formés dans chacune des deux faces du joint de culasse.

6. Joint de culasse selon l'une quelconque des revendications 1 à 5, **caractérisé par le fait que** les nervures circulaires (20' 20') entourant les stoppeurs (30) ont une section en « V » et prennent appui par leur arête dans des lamages annulaires (9, 9') formés dans la tôle (3).

## Patentansprüche

1. Verbrennungsmotor-Zylinderkopfdichtung (1), die geeignet ist, unter Zusammendrücken zwischen einen Motorblock und einen Zylinderkopf eingelegt zu werden, wobei eine Reihe von kreisförmigen, so genannten Hauptöffnungen (4), die dazu bestimmt sind, jeweils mit einer Zylinderbohrung des Motorblocks übereinzustimmen, und eine Gruppe von so genannten Nebenöffnungen (5, 60, 61, 62, 63, 64) durch diese Dichtung (1) gehen, die dazu bestimmt sind, jeweils mit einem Durchgang übereinzustimmen, der für eine Verbindung zwischen dem Motorblock und dem Zylinderkopf sorgt, wobei die Dichtung Folgendes umfasst:
- ein mittleres Blech (3), das eine Unterlegplatte bildet und ringförmige Ränder (30) oder "Stopper" besitzt, die den Rand der Hauptöffnungen (4) umgeben und die Dichtigkeit an dieser Stelle gewährleisten,
- zwei dünnere äußere Bleche (2, 2'), zwischen denen das mittlere, die Unterlegplatte bildende Blech eingelegt ist und die kreisförmige Öffnungen aufweisen, die den Hauptöffnungen (4) entsprechen, und kreisförmige Rippen (20, 20') besitzen, die die Stopper (30) des die Unterlegplatte bildenden Blechs (3) umgeben, indem sie Letzteres einklemmen,
**dadurch gekennzeichnet, dass** sich die äußeren Bleche nur über einen begrenzten Bereich erstrecken, der den Hauptöffnungen (4) entspricht, ohne die den Nebenöffnungen entsprechenden Bereiche abzudecken, und dass die Nebenöffnungen des mittleren Blechs mit einer angespritzten oder angeflossenen Dichtung (7; 8) aus weichem und elastischem Material ausgekleidet sind.

2. Zylinderkopfdichtung nach Anspruch 1, **dadurch gekennzeichnet, dass** die Dichtung (7; 8) ein Elastomer ist.

3. Zylinderkopfdichtung nach Anspruch 2, **dadurch gekennzeichnet, dass** die Elastomerdichtung (7) an die Kante der Zylinderkopfdichtung um die Öffnung (62) herum angespritzt ist.

4. Zylinderkopfdichtung nach Anspruch 1, **dadurch gekennzeichnet, dass** die Elastomerdichtung (8) in einer ringförmigen Vertiefung (9) angeordnet ist, die in mindestens einer der beiden Flächen der Zylinderkopfdichtung ausgebildet ist und die Öffnung (60) umgibt.

5. Zylinderkopfdichtung nach Anspruch 4, **dadurch gekennzeichnet, dass** sie ein Paar Elastomerdichtungen (8 - 8') umfasst, die in ringförmigen Vertiefungen (9, 9') angeordnet sind, die in jeder der beiden Flächen der Zylinderkopfdichtung ausgebildet sind.

6. Zylinderkopfdichtung nach einem der Ansprüche 1 bis 5, **dadurch gekennzeichnet, dass** die die Stopper (30) umgebenden kreisförmigen Rippen (20, 20') einen V-förmigen Querschnitt haben und mit der Spitze des V in im Blech (3) ausgebildeten ringförmigen Senkungen (9, 9') ruhen.

## Claims

1. Cylinder head gasket (1) for an internal combustion engine, that can be interposed, compressed, between an engine block and a cylinder head, this gasket (1) having passing through it a series of circular openings (4), referred to as main openings, each intended to align with a cylinder bore of the engine block, and a set of openings (5, 60, 61, 62, 63, 64), referred to as ancillary openings, each intended to align with a passage providing communication between the engine block and the cylinder head, the said gasket comprising:
- a central sheet (3) forming a thickness shim having annular rims (30), or "stoppers", which surround the edge of the main openings (4) and provide sealing at this point,
- two thinner outer sheets (2, 2') between which the shim-forming central sheet is interposed, these having circular openings that correspond to the main openings (4) and having circular ribs (20' 20') which surround the stoppers (30) of the sheet (3) forming the thickness shim, gripping the latter,
**characterized in that** the said outer sheets extend only over a limited area corresponding to the main openings (4) without covering the areas corresponding to the ancillary openings, and **in that** the said ancillary openings in the central sheet are lined with an overmoulded or flowed seal (7; 8) made of a soft elastomeric material.

2. Cylinder head gasket according to Claim 1, **characterized in that** the said seal (7; 8) is made of elastomer.

3. Cylinder head gasket according to Claim 2, **characterized in that** the said elastomer seal (7) is overmoulded on the edge of the cylinder head gasket, all around the opening (62).

4. Cylinder head gasket according to Claim 1, **characterized in that** the said elastomer seal (8) is positioned in an annular indentation (9) formed in at least one of the two faces of the cylinder head gasket and surrounding the opening (60).

5. Cylinder head gasket according to Claim 4, **characterized in that** it comprises a pair of elastomer seals (8-8') positioned in annular indentations (9, 9') formed in each of the two faces of the cylinder head gasket.

6. Cylinder head gasket according to any one of Claims 1 to 5, **characterized in that** the circular ribs (20' 20') surrounding the stoppers (30) have a V-shaped cross section with the point of the V resting in annular spot faces (9, 9') formed in the sheet (3).
